# EUROPEAN PATENT APPLICATION

(11) **EP 1 091 543 A1**
(43) Date of publication of application: **11.04.2001**
(21) Application number: 99610058.2
(22) Date of filing: 08.10.1999
(51) Int. Cl.: H04M 1/725

(54) **Method of using a cellular telephone for playback of audio signals downloaded from the network**

(71) Applicant: TELEFONAKTIEBOLAGET LM ERICSSON (publ), 126 25 Stockholm (SE)
(72) Inventor: Borgström, Anders, 239 32 Skanör (SE); Hollström, Magnus, 226 49 Lund (SE)
(74) Representative: Boesen, Johnny Peder

(57) **Abstract**

A method of using a cellular telephone (2) connectable to at least one sound reproducing unit (10) for playback of audio signals comprises the steps of downloading a digitized and compressed audio file to the cellular telephone (2), decompressing the digitized and compressed audio file, playing back the decompressed audio file as audibly perceptible signals via the sound reproducing unit (10), reducing during telephone calls the sound level of the audibly perceptible signals which are played back from said audio file, and using the sound reproducing unit (10) for the telephone conversation. In this way a user can listen to audio signals from compressed digitized audio files or use the cellular telephone without having to carry more than one device.

## Description

The invention relates to a method of using a cellular telephone connectable to at least one sound reproducing unit for playback of audio signals. The invention further relates to a system for playback of audio signals, a cellular telephone and an accessory device for use in connection with a cellular telephone.

Portable playback devices for use with e.g. audio cassettes or compact discs (CD's) have been known for many years and are widely used, because they allow a user to listen to music or other audio information at any place and during transport.

Today, different methods of compressing digitized audio signals significantly are also known, and this situation has led to the fact that portable storage mediums, such as memory cards, of even limited size can store a considerable amount of audio information. Therefore, also portable playback devices for such storage mediums have been made available. As an example, portable playback devices for audio files in MP3 format may be mentioned.

US 5 841 979 discloses a portable digital audio storage and playback apparatus for reception, storage, D/A conversion and playback of digitized and compressed audio files. The compressed audio files may be received at a transfer rate that is at least two times the normal audible playback rate. A similar apparatus is known from US 5 914 941, which mentions that program material can be obtained either through a digital data storage cartridge, which may be removable, or through electronic data transfer from cable TV or similar sources.

However, these devices are designed to be used exclusively for playback of audio information. Many users have a need for other functions which these devices are not able to fulfil, and, thus, these users have to carry additional devices in order to have their needs fulfilled.

It is also known, e.g. from WO 99/03294, to share a common headset between a radio telephone and an audio device, such that the headset is used for telephone conversation when the telephone is active, and switched to the audio device when the telephone is not active. The audio device and the telephone may also share a common housing as a single device, which is easier and lighter to carry than two individual devices separately. However, the audio device is either a receiver for public audio broadcast programs, or it is a compact disc player or a cassette player. Thus, this device does not provide the possibility to play back compressed digitized audio files as described above.

Thus, it is an object of the invention to provide a method of using a cellular telephone for playback of audio signals, in which the user can listen to audio signals from compressed digitized audio files or use the cellular telephone without having to carry more than one device.

According to the invention, this is achieved in that the method comprises the steps of downloading a digitized and compressed audio file to the cellular telephone, decompressing the digitized and compressed audio file, playing back the decompressed audio file as audibly perceptible signals via the sound reproducing unit, reducing during telephone calls the sound level of the audibly perceptible signals which are played back from said audio file, and using the sound reproducing unit for the telephone conversation.

Downloading the digitized and compressed audio file directly to the cellular telephone allows a solution which is very comfortable in use, because the user does not have to carry any portable storage mediums, such as audio cassettes, compact discs or memory cards, with the audio files. Further, using the same sound reproducing unit, which could typically be a headset, for the audio playback and the telephone, the user obtains both functions while carrying only one single device.

When, as stated in claim 2, the digitized and compressed audio file is stored in a storage medium and subsequently decompressed for playback, the audio files can be downloaded at a time convenient for the user, and then decompressed and played back at a later stage, when the user wants to listen to the audio signals. The user can also listen to the same audio files several times.

Alternatively, as is stated in claim 3, the digitized and compressed audio file may be decompressed and played back successively as it is downloaded. This has the advantage that no storage memory is needed in the cellular telephone.

As stated in claim 4, means for downloading, decompressing and playing back the audio file may be integrated in the cellular telephone, which provides a very handy solution. Alternatively, as stated in claim 5, an accessory device comprising means for downloading, decompressing and playing back the audio file may be connected to the cellular telephone. This has the advantage that the solution can be used with an ordinary standard cellular telephone, thus avoiding the need for a cellular telephone specially designed for this purpose.

An expedient embodiment of the invention is obtained, when, as stated in claim 6, the digitized and compressed audio file is downloaded to the cellular telephone via a wireless link, thus avoiding the need for wired connections. As stated in claim 7, the wireless link may be a wireless public network, such as GSM, GPRS, EDGE or WCDMA, preferably of the same type as the cellular telephone, such that the telephone itself is used for downloading the audio files. Alternatively, as stated in claim 8, the wireless link may be a wireless shortlink, such as Bluetooth or an infrared connection. This solution is used when downloading e.g. from a computer or another device placed in the vicinity of the telephone.

The MP3 format is today widely used around the world for the compression of audio files, and, therefore, it is very expedient when, as stated in claim 9, the digitized and compressed audio file is compressed in the MP3 format.

As mentioned, the invention further relates to a system for playback of audio signals. When the system comprises a cellular telephone connectable to at least one sound reproducing unit, means for downloading a digitized and compressed audio file to the cellular telephone, means for decompressing the digitized and compressed audio file, means for playing back the decompressed audio file as audibly perceptible signals via the sound reproducing unit, and means for reducing during telephone calls the sound level of the audibly perceptible signals which are played back from said audio file, and using the sound reproducing unit for the telephone conversation, the same advantages are obtained as mentioned for the method above.

As mentioned, the invention further relates to a cellular telephone connectable to at least one sound reproducing unit and adapted for playback of audio signals. When the cellular telephone comprises means for downloading a digitized and compressed audio file to the cellular telephone, means for decompressing the digitized and compressed audio file, means for playing back the decompressed audio file as audibly perceptible signals via the sound reproducing unit, and means for reducing during telephone calls the sound level of the audibly perceptible signals which are played back from said audio file, and using the sound reproducing unit for the telephone conversation, the same advantages are obtained as mentioned for the method above.

As mentioned, the invention further relates to an accessory device for use in connection with a cellular telephone connectable to at least one sound reproducing unit for playback of audio signals. When the accessory device comprises means for downloading a digitized and compressed audio file to the cellular telephone, means for decompressing the digitized and compressed audio file, means for playing back the decompressed audio file as audibly perceptible signals via the sound reproducing unit, and means for reducing during telephone calls the sound level of the audibly perceptible signals which are played back from said audio file, and using the sound reproducing unit for the telephone conversation, the same advantages are obtained as mentioned for the method above.

The invention will now be described more fully below with reference to the drawing, in which
figure 1 shows a first embodiment of the invention, and
figure 2 shows a second embodiment of the invention.

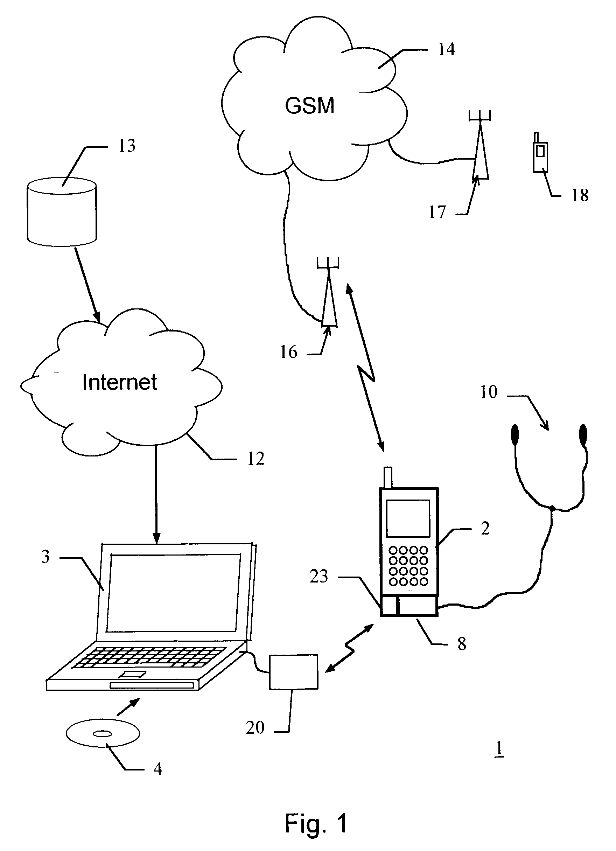

Figure 1 shows an example of a system 1 for providing a cellular telephone 2 with a combination of portable handsfree and hi-fi audio stereo playback according to the invention. In the example, the telephone 2 is a GSM phone, and through its built-in antenna it communicates with a GSM base station 16 connected to a GSM network 14. Just for illustration it is shown that also other base stations, such as the base station 17, and other GSM phones, such as the phone 18, are connected to the network 14. Thus, the telephone 2 can be used as any other normal GSM phone for two-way communication with other telephones.

In the figure it is seen that an accessory device in the form of a plug-in device 8 is connected to the phone 2 galvanically at the bottom end of the phone. A sound reproducing unit in the form of a headset 10 is connected to the accessory device 8, but it could just as well be connected directly to the telephone 2. Further, a receiver 23 for a wireless shortlink, such as Bluetooth or infrared, is connected to the phone 2 for reception of digitized and compressed audio files, e.g. in MP3 format. Storage media, e.g. in the form of flash memory in the size of 32 Mbytes, on which the digitized and compressed audio files are stored, will be either built-in or removably connected to the device 8. The accessory device 8 is adapted to decompress or decode the compressed audio files and playback the resulting audio signals through the headset 10.

If audio contents (e.g. music) are played in the headset and an incoming call appears, the audio playback will be halted or softened, i.e. the sound level reduced, while the conversation is going on. The speech signals received during the conversation are now reproduced in the headset that was used before the call for playback of the audio files. When the conversation is finished, the audio playback is resumed.

The accessory device 8 also consists of control and monitoring electronics, but it has no Man Machine Interface (MMI), because this part is taken care of by the telephone (display and keyboard) by e.g. using so-called dynamic menues. The phone 2 and the accessory device 8 have an active communication on a serial link. The accessory device 8 can drive most hi-fi headsets on the market, and it also allows routing of a microphone signal for the uplink voice path as well as downlink voice to the headset from the GSM network.

Alternatively, the functions of the accessory device 8 are integrated into the cellular telephone 2 such that one single device contains the telephone as well as the functions described above.

As mentioned, the MP3 audio files are stored in a memory device in the accessory device 8 of the size of e.g. 32 Mbytes of flash memory, which corresponds to about 30 minutes of hi-fi music or several hours of high quality voice audio.

The figure also shows how to get the compressed audio files to the wireless shortlink receiver 23. A dedicated server 13 belonging to a service provider of compressed audio files is connected to the Internet 12, and the audio content is downloaded from the Internet via reasonably fast, wired link to a personal computer 3. From the computer 3 it is handed over to a wireless shortlink transmitter 20 using a normal drag-and-drop manoeuvre on the screen of the personal computer. Alternatively, the content can be automatically transferred from the network and to the transmitter. The personal computer is connected to the Internet via a normal modem or a faster Ethernet line.

It should be mentioned that instead of the wireless short link communication between the transmitter 20 and the receiver 23, communication via a wire could be used just as well.

The compressed audio files can also be generated in the personal computer without being downloaded from the Internet. As shown, a compact disc 4 may be inserted into a slot in the computer, and the MP3 content is then obtained by converting from CD format in the personal computer 3 by means of special software. This process is also known as "ripping".

As an alternative to storing the digitized and compressed audio files in a built-in or removable storage medium, the audio content may be "streamed down", which means that the audio signals are received, decompressed and played back continously. In this case no storage memory is needed.

In the example the telephone and the corresponding network are of GSM type, but of course any other cellular system (e.g. WCDMA, GPRS or EDGE) may be used as well.

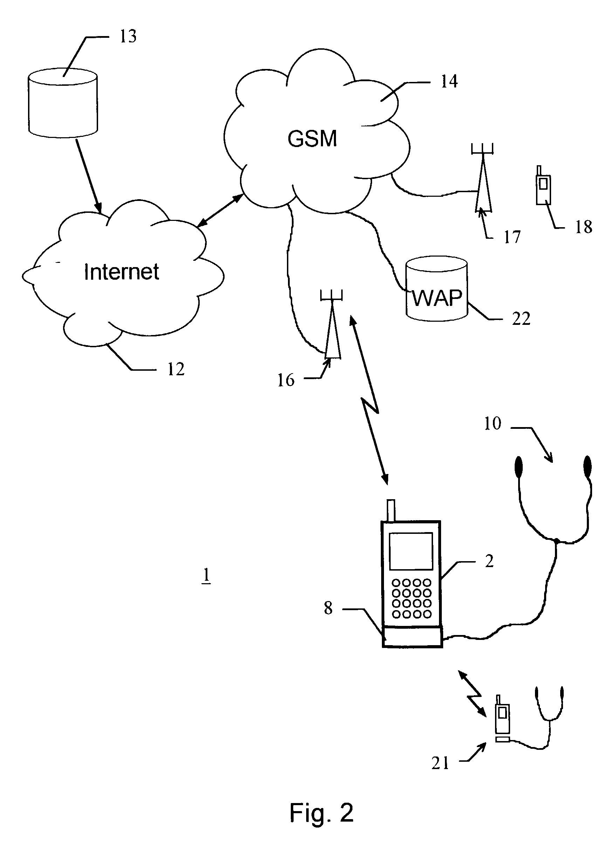

An alternative embodiment is shown in figure 2. Instead of transmitting the audio files through a wireless shortlink from a personal computer like in figure 1, the wireless public network (i.e. in the shown example the GSM network) already used by the cellular telephone 2 for the standard two-way communication, is used also for the transfer of the audio files to the telephone. Thus the network is used for digital real time voice conversation as well as downloading of Internet non-real time audio signals (music, news, weather, books, etc.). The audio files downloaded through the GSM network (or other type of cellular network) may come from a dedicated server 13 connected to the Internet 12, as described above, or they may come from a WAP server connected directly to the GSM network. In the latter case the telephone must support WAP.

Again in this situation, the digitized and compressed audio files may either be stored in a memory for subsequent decompression and playback, or they may be "streamed down", as described above.

This solution is preferably used with networks providing relatively high data transmission rates. The bandwidth of the faster links in the public wireless network will allow even hi-fi music to be downloaded in reasonable times. As an example, MP3 files require 128 kbps. EDGE provides 384 kbps corresponding to 60 seconds per track, while WCDMA provides 2 Mbps corresponding to 120 seconds per track for a compact disc. A possibility to listen online, i.e. streaming, will also be possible. This will provide real mobile "on-demand" service.

As shown in figure 2, it is also possible to forward the audio files to other terminals. Thus, a user can transfer audio contents quickly to a friend having the same type of telephone by using a wireless shortlink, such as Bluetooth. As an example, he can "beam over" a song. It will be seen that the telephone 2 communicates e.g. via a Bluetooth link with another telephone 21.

Although a preferred embodiment of the present invention has been described and shown, the invention is not restricted to it, but may also be embodied in other ways within the scope of the subject-matter defined in the following claims.

## Claims

1. A method of using a cellular telephone (2) connectable to at least one sound reproducing unit (10) for playback of audio signals, the method comprising the steps of:
• downloading a digitized and compressed audio file to the cellular telephone (2),
• decompressing the digitized and compressed audio file,
• playing back the decompressed audio file as audibly perceptible signals via the sound reproducing unit (10),
• reducing during telephone calls the sound level of the audibly perceptible signals which are played back from said audio file, and using the sound reproducing unit (10) for the telephone conversation.

2. A method according to claim 1, **characterized** in that the digitized and compressed audio file is stored in a storage medium and subsequently decompressed for playback.

3. A method according to claim 1, **characterized** in that the digitized and compressed audio file is decompressed and played back successively as it is downloaded.

4. A method according to claims 1-3, **characterized** in that means for downloading, decompressing and playing back the audio file is integrated in the cellular telephone (2).

5. A method according to claims 1-3, **characterized** in that an accessory device (8) comprising means for downloading, decompressing and playing back the audio file is connected to the cellular telephone (2).

6. A method according to claims 1-5, **characterized** in that the digitized and compressed audio file is downloaded to the cellular telephone via a wireless link.

7. A method according to claim 6, **characterized** in that the wireless link is a wireless public network, such as GSM, GPRS, EDGE or WCDMA.

8. A method according to claim 6, **characterized** in that the wireless link is a wireless shortlink, such as Bluetooth or an infrared connection.

9. A method according to claims 1-8, **characterized** in that the digitized and compressed audio file is compressed in the MP3 format.

10. A system for playback of audio signals, comprising:
• a cellular telephone (2) connectable to at least one sound reproducing unit (10),
• means for downloading a digitized and compressed audio file to the cellular telephone (2),
• means for decompressing the digitized and compressed audio file,
• means for playing back the decompressed audio file as audibly perceptible signals via the sound reproducing unit (10), and
• means for reducing during telephone calls the sound level of the audibly perceptible signals which are played back from said audio file, and using the sound reproducing unit (10) for the telephone conversation.

11. A cellular telephone (2) connectable to at least one sound reproducing unit (10) and adapted for playback of audio signals, comprising:
• means for downloading a digitalized and compressed audio file to the cellular telephone (2),
• means for decompressing the digitized and compressed audio file,
• means for playing back the decompressed audio file as audibly perceptible signals via the sound reproducing unit (10), and
• means for reducing during telephone calls the sound level of the audibly perceptible signals which are played back from said audio file, and using the sound reproducing unit (10) for the telephone conversation.

12. An accessory device (8) for use in connection with a cellular telephone (2) connectable to at least one sound reproducing unit (10) for playback of audio signals, comprising:
• means for downloading a digitized and compressed audio file to the cellular telephone (2),
• means for decompressing the digitized and compressed audio file,
• means for playing back the decompressed audio file as audibly perceptible signals via the sound reproducing unit (10), and
• means for reducing during telephone calls the sound level of the audibly perceptible signals which are played back from said audio file, and using the sound reproducing unit (10) for the telephone conversation.
